Europäisches Patentamt

European Patent Office

Office européen des brevets

(11) Numéro de publication: **0 436 649 B1**

(12) **FASCICULE DE BREVET EUROPEEN**

(45) Date de publication de fascicule du brevet: **20.07.94** (51) Int. Cl.5: **B29D 7/01**, D21H 21/52

(21) Numéro de dépôt: **89911562.0**

(22) Date de dépôt: **28.09.89**

(86) Numéro de dépôt internationale :
**PCT/FR89/00499**

(87) Numéro de publication internationale :
**WO 90/03262 (05.04.90 90/08)**

(54) **COMPOSITION DE BASE POUR LA FABRICATION D'UN PRODUIT EN FEUILLE, FLEXIBLE ET POREUX A BASE DE POUDRE D'ELASTOMERE, PRODUIT EN FEUILLE ET SON PROCEDE DE PREPARATION.**

(30) Priorité: **30.09.88 FR 8812854**
**26.10.88 FR 8813994**

(43) Date de publication de la demande:
**17.07.91 Bulletin 91/29**

(45) Mention de la délivrance du brevet:
**20.07.94 Bulletin 94/29**

(84) Etats contractants désignés:
**AT BE CH DE FR GB IT LI LU NL SE**

(56) Documents cités:
**EP-A- 0 006 390         EP-A- 0 060 664**
**WO-A-81/00268         BE-A- 701 962**
**BE-A- 823 626         DE-A- 2 746 522**
**FR-A- 1 177 128         FR-A- 2 238 577**
**FR-A- 2 471 272         FR-A- 2 514 015**

(73) Titulaire: **ARJO WIGGINS S.A.**
**3, rue du Pont de Lodi**
**F-75006 Paris(FR)**

(72) Inventeur: **DEBAUX, Bernard**
**38, avenue des Sapins**
**F-94100 Saint-Maur(FR)**
Inventeur: **FREDENUCCI, Pierre**
**Villa des Vannes**
**F-38850 Charavines(FR)**

(74) Mandataire: **Portal, Gérard et al**
**Cabinet Beau de Loménie**
**158, rue de l'Université**
**F-75340 Paris Cédex 07 (FR)**

Rank Xerox (UK) Business Services
(3.10/3.09/3.3.3)

**Description**

L'invention concerne un produit en feuille, poreux et flexible à base de poudre d'élastomère. L'invention concerne aussi sa composition et son procédé de fabrication.

Plus particulièrement, l'invention concerne un produit en feuille, poreux et flexible, qui comprend au moins un élastomère sous forme de poudre, des fibres naturelles et/ou minérales, éventuellement des charges minérales et/ou organiques et éventuellement d'autres additifs. L'invention concerne aussi le procédé de fabrication de ce produit en feuille par voie humide, et notamment par voie papetière.

Les produits en feuille décrits par la demanderesse dans son brevet EP-6 390 conduisent à des matériaux présentant une flexibilité et une porosité insuffisantes pour répondre à certaines exigences du marché des supports pour revêtements de sol en poly(chlorure de vinyle) épais.

Dans ce cadre, la demanderesse a confirmé l'impossibilité d'améliorer la flexibilité de ces produits de manière satisfaisante par augmentation du taux de latex incorporé en masse ou par ajout de latex par une technique d'imprégnation.

De plus, de tels ajouts conduisent à des problèmes connus de bullage et de claquage des couches de plastisols lors de la transformation dus à un manque de porosité du support.

En effet, on connaît déjà des produits en feuille élastiques, c'est-à-dire à haut niveau d'allongement sous traction. Pour fabriquer ces produits, il est nécessaire d'introduire une grande quantité d'élastomère sous forme de solution, de dispersion ou d'émulsion. Ces élastomères sous de telles formes permettent de former un film continu après élimination par séchage du milieu de mise en solution, émulsion ou suspension. Ce caractère filmogène de l'élastomère confère au matériau une élasticité importante, une bonne cohésion interne, mais une très faible porosité.

On sait introduire ces élastomères par diverses techniques utilisées seules ou combinées telles que :
- la floculation de latex d'élastomères en masse. Cette technique ne permet pas d'introduire plus de 30 % d'élastomère, sur machine à papier, par rapport au reste des composants. En effet, les élastomères sont des produits mous, très collants, occasionnant des encrassements par dépôt dans les circuits et sur la toile de la machine à papier. De plus, cette technique par floculation présente l'inconvénient, en présence des fibres organiques et/ou minérales, de conduire, en dehors de la floculation du latex nécessaire à sa rétention, à la floculation des fibres, ce qui affecte fortement l'homogénéité du matériau, le dépôt par pulvérisation sur la feuille sèche ou humide. Ce dépôt nécessiste un matériel supplémentaire et ne permet pas d'introduire de manière homogène des quantités importantes d'élastomères dans l'épaisseur du matériau,
- le dépôt par imprégnation de la feuille sèche ou humide. Ce dépôt est limité par le pouvoir absorbant de la feuille et nécessiste un matériel supplémentaire très coûteux (imprégnatrice). Cette dernière technique est la plus utilisée. On connaît notamment les matériaux cellodeimes qui sont constitués par une feuille cellulosique, dans laquelle on incorpore un ou plusieurs latex d'élastomères par imprégnation en fin de partie humide de la machine à papier. Cette technique de fabrication conduit à un bouchage important de la feuille cellulosique.

Dans tous les cas, ces traitements complémentaires affectent très sensiblement la vitesse de marche de la machine à papier et créént une dépense supplémentaire d'énergie pour l'élimination du milieu de mise en solution, dispersion ou émulsion de l'élastomère.

De plus, comme dit précédemment, le caractère filmogène de l'élastomère introduit par ces techniques conduit à des produits élastiques mais de faible porosité, d'autant plus qu'on incorpore des taux importants d'élastomères.

La demande de brevet français FR 2 514 015 décrit des compositions de base pour fabriquer des produits sous forme de feuille, les produits sous forme de feuille ainsi que le procédé pour les fabriquer. Les compositions de base décrites dans ce document contiennent des fibrilles de polyoléfines et des particules caoutchouteuses de granulométrie comprise entre 0,55 et 5 mm. Les feuilles sont obtenues, de préférence par voie papetière à partir d'une suspension aqueuse des constituants de la composition de base. Les feuilles obtenues qui ont une très faible cohésion interne doivent être consolidées par chauffage à une température supérieure au point de ramollissement des fibres de polyoléfines.

La présente invention a donc pour but de résoudre le problème technique consistant en la fourniture d'un produit en feuille qui possède les caractéristiques suivantes :
- une structure homogène,
- une haute élasticité,
- une forte porosité,
- une bonne cohésion interne.

2

EP 0 436 649 B1

Un autre but de l'invention est d'obtenir un tel produit par un procédé par voie humide. On entend par "procédé par voie humide" un procédé de formation d'une feuille sur une toile par égouttage d'une suspension, puis séchage de la feuille.

L'invention a encore pour but de résoudre le problème technique précité en fournissant une solution permettant de fabriquer un tel produit en feuille avec le minimum d'étapes.

L'invention résout les problèmes techniques précités, simultanément, pour la première fois, d'une manière satisfaisante, utilisable à l'échelle industrielle.

Ainsi, selon un premier aspect, l'invention fournit une composition de base pour la fabrication d'un produit en feuille notamment obtenu, par voie humide, du type comprenant un mélange d'une poudre de polymère de granulométrie donnée et des fibres, comprenant un mélange, de préférence intime de :

- de 20 à 80 % en poids d'au moins un élastomère en poudre de granulométrie inférieure au moins à 500 $\mu$m,
- de 10 à 70 % en poids de fibres, de longueur inférieure à environ 10 mm, choisies dans le groupe formé par les fibres naturelles, les fibres minérales et leurs mélanges,
- éventuellement de 0 à 20 % en poids d'au moins un liant,
- éventuellement de 0,1 à 5 % en poids d'au moins un floculant et/ou d'au moins un agent de rétention,
- éventuellement de 0 à 40 % d'au moins une charge minérale et/ou organique, cette charge pouvant éventuellement remplacer en partie ledit élastomère, le total des composants ci-dessus étant de 100 %, les teneurs étant exprimées en poids sec. Cette composition peut comporter éventuellement des adjuvants habituels de papeterie bien connus de l'homme de l'art.

Selon un deuxième aspect, l'invention fournit un produit en feuille, notamment obtenu par voie humide, en particulier obtenu à partir de la composition de base précitée.

Ce produit en feuille est caractérisé en ce qu'il comprend un mélange, de préférence intime, de :

- de 20 à 80 % en poids d'au moins un élastomère en poudre de granulométrie inférieure au moins à 500 $\mu$m,
- de 10 à 70 % en poids de fibres, de longueur inférieure à environ 10 mm choisies dans le groupe formé par les fibres naturelles, les fibres minérales et leurs mélanges.
- éventuellement de 0 à 20 % en poids d'au moins un liant,
- éventuellement de 0,1 à 5 % en poids d'au moins un floculant et/ou d'au moins un agent de rétention,
- éventuellement de 0 à 40 % d'au moins une charge minérale et/ou organique, cette charge pouvant éventuellement remplacer en partie ledit élastomère, le total des composants ci-dessus étant de 100 %, les teneurs étant exprimées en poids sec. Cette composition peut comporter éventuellement des adjuvants habituels de papeterie bien connus de l'homme de l'art.

Selon une variante de réalisation de l'invention, les fibres précitées sont des fibres de cellulose de préférence raffinées.

Selon un autre variante de réalisation de l'invention, les fibres précitées comprennent un mélange de fibres de verre et de fibres de cellulose.

Selon un mode de réalisation particulièrement avantageux, la poudre élastomère précitée, dite poudrette d'élastomère, comprend un caoutchouc vulcanisé de récupération.

Selon un autre mode de réalisation préféré de l'invention, la composition de base précitée ou le produit en feuille précité est caractérisé en ce qu'il comprend :

- 70 à 75 % environ en poids d'un mélange de poudre de caoutchouc vulcanisé et éventuellement une charge minérale et/ou organique,
- 15 à 20 % environ en poids de fibres de cellulose de préférence raffinées et/ou de fibres minérales,
- 8 à 12 % environ en poids d'au moins un liant type latex,
- 0,3 à 0,5 % environ en poids d'au moins un floculant cationique, le total des composants ci-desus étant de 100%, les teneurs étant exprimées en poids sec. Cette composition peut comporter éventuellement des adjuvants habituels de papeterie bien connus de l'homme de l'art.

De tels adjuvants peuvent être constitués par exemple des agents hydrofugeants, des lubrifiants, des anti-mousses. L'agent hydrofugeant peut par exemple être un alkylcétène dimère, de la colophane modifiée ou non.

Selon un troisième aspect, la présente invention fournit encore un procédé de préparation par voie humide d'un produit en feuille selon l'invention caractérisé en ce que

- on prépare une suspension aqueuse d'un mélange contenant :
  . de 20 à 80 % en poids d'un élastomère en poudre, de granulométrie moyenne inférieure à 500 $\mu$m ou d'un mélange de cet élastomère avec au moins une charge,
  . de 10 à 70 % enpoids de fibres de longueur inférieure à 10 mm choisies dans le groupe formé par les fibres naturelles, les fibres minérales et leurs mélanges,

3

EP 0 436 649 B1

- on ajoute éventuellement une première quantité d'un agent floculant à la suspension,
- on ajoute éventuellement de 0 à 20 % en poids d'un liant à la suspension contenant l'agent floculant,
- on ajoute éventuellement des adjuvants,
- on ajoute éventuellement ensuite une seconde quantité d'un agent floculant et/ou d'un agent de rétention,
- on dépose la suspension aqueuse résultante sur une toile,
- on égoutte la suspension déposée sur la toile pour former une feuille humide, et
- on sèche la feuille pour obtenir ledit produit en feuille.

Selon un mode de réalisation du procédé selon l'invention, il peut être avantageux de procéder à des traitements complémentaires du produit en feuille ainsi obtenu pour lui conférer des propriétés particulières. Ces traitements peuvent être réalisés par tous les moyens connus en papeterie tels que la "size-press" ou les coucheuses.

La demanderesse a pu constater de manière surprenante que l'invention telle que précédemment décrite permet d'obtenir pour la première fois un produit en feuille possédant simultanément les caractéristiques requises précédemment. Ainsi, il est possible de fabriquer un matériau poreux conservant des propriétés importantes d'élasticité en introduisant un élastomère sous forme de poudre et sans avoir besoin de former un film élastique.

De plus, la demanderesse a constaté contrairement à ce que pouvait craindre l'homme du métier que l'introduction de tels élastomères sous forme de poudre ne perturbe pas la cohésion interne du matériau malgré une très forte augmentation de la porosité et de la main de celui-ci.

Selon l'invention, par "élastomère en poudre", ou "poudrette élastomère", on entend un élastomère ayant une granulométrie inférieure à environ 500 $\mu$m, de préférence comprise entre environ 40 et environ 300$\mu$m.

Comme produit élastomère selon l'invention, on peut utiliser tous les élastomères pouvant se mettre sous forme de poudre et notamment le caoutchouc naturel vulcanisé ou non, le caoutchouc synthétique tel que le BUNA (polymère de butadiène), le BUNA S ou SBR (copolymère butadiène-styrène), les copolymères butadiène-nitrile acryliques, les polychloroprènes (polymères du chloro-2 butadiène), les polyméthylènes chlorosulfonés, les polyisobutylènes, les copolymères éthylène-propylène, isobutylènebutadiène, l'isoprène, les esters polyacryliques, les dérivés fluorés du caoutchouc, les caoutchoucs de silicone, les élastomères de polyuréthannes. Pour des raisons économiques, on préfère utiliser comme élastomères des poudres provenant des déchets de caoutchouc vulcanisés ou non et notamment ceux provenant de pneumatiques usagés. Ces poudres sont disponibles en grande quantité et à un coût nettement plus faible que les élastomères sous forme de latex utilisés selon les techniques antérieures.

Les fibres utilisables pour la fabrication du produit selon l'invention sont des fibres ayant une longueur inférieure à 10 mm. On peut utiliser des fibres naturelles ou minérales ou leurs mélanges. De préférence, on utilise des fibres cellulosiques. En dehors des fibres cellulosiques, les fibres utilisables sont par exemple les suivantes :

- fibres de verre (de préférence de 5 à 15 $\mu$m de diamètre et 3 6 mm de longueur),
- fibres de sulfate de calcium ou gypse aciculaire (de préférence de 0,5 à 3 mm de longueur),
- laine de roche (0,1 à 0,3 mm de longueur).

Les liants qui peuvent être utilisés selon l'invention sont par exemple les suivants :

- fécule native,
- amidon natif, notamment amidon de mais natif,
- ester phosphorique d'amidon,
- amidon carboxyméthylé,
- fécule oxydée,
- fécule enzymée (enzyme : $\alpha$-amylase, pour l'obtention d'une répartition des unités de glucose variables entre 50 et 3 000) (pour le polymère linéaire amylose),
- amidon hydroxyméthylé
- carboxyméthylcellulose technique (5 à 30 % de chlorure de sodiumdegré de substitution : 0,7 à 0,8),
- alcool polyvinylique,
- polymère renfermant 87 à 90 parties en poids de motif acrylate d'éthyle, 1 à 8 parties en poids de motif acrylonitrile, 1 à 6 parties en poids de motif N-méthylolacrylamide et 1 à 6 parties en poids de motif acide acrylique,
- dispersion aqueuse à 40 - 55 %,
- polymère renfermant 60 à 75 parties en poids de motif acrylate d'éthyle, 35 à 40 parties en poids de motif acrylonitrile et 1 à 7 parties en poids de motif acide méthacrylique,
- dispersion aqueuse à 40 - 55 %,

4

- polymère renfermant 38 à 50 parties en poids de motif styrène, 47 à 59 parties en poids de motif butadiène et 1 à 6 parties en poids de motif méthylacrylamide,
- dispersion aqueuse à 40 - 55 %,
- polymère renfermant 53 à 65 parties en poids de motif styrène, 32 à 44 parties en poids de motif butadiène et 1 à 6 parties en poids de motif méthylacrylamide,
- dispersion aqueuse à 40 - 55 %,
- terpolymère éthylène/acétate de vinyle/chlorure de vinyle,
- dispersion aqueuse à 40 - 55 %.

Les floculants et les agents de rétention utilisables sont par exemple les suivants :
- sulfate d'aluminium,
- polychlorure d'aluminium (hydroxychlorure d'aluminium),
- aluminate de sodium et de calcium,
- mélange d'acide polyacrylique et de polyacrylamide en solution à 5 - 30 % (poids/volume),
- polyéthylèneimine en solution à 2 - 50 % (poids/volume),
- copolymère d'acrylamide et de $\beta$-méthacrylyloxyéthyltriméthylammonium méthylsulfate,
- résine polyamine-épichlorhydrine et de diamine-propylméthylamine en solution à 2 - 50 %,
- résine polyamine-épichlorhydrine fabriquée à partir d'épichlorhydrine, d'acide adipique, de caprolactame, de diéthylènetriamine et/ou d'éthylènediamine, en solution à 2 - 50 %,
- résine polyamide - polyamine-épichlorhydrine fabriquée à partir d'épichlorhydrine, d'ester diméthylique, d'acide adipique et de diéthylènetriamine, en solution à 2 - 50 %,
- résine polyamide-épichlorhydrine fabriquée à partir d'épichlorhydrine, de diéthylènetriamine, d'acide adipique et d'éthylèneimine,
- résine polyamide-épichlorhydrine fabriquée à partir d'acide adipique, de diéthylènetriamine et d'un mélange d'épichlorhydrine et diméthylamine en solution à 2 - 50 %,
- résine polyamide-polyamine cationique fabriquée à partir de triéthylènetriamine,
- produits de condensation d'acides sulfoniques aromatiques avec le formaldéhyde,
- acétate d'aluminium,
- formiate d'aluminium,
- mélange d'acétate, sulfate et formiate d'aluminium,
- chlorure d'aluminium ($AlCl_3$),
- amidon cationique.

On peut éventuellement ajouter des charges minérales, les charges utilisables sont par exemples les suivantes :
- talc : silicate de magnésium complexe - particules de 1 à 50 $\mu$m, de préférence 2 à 50 $\mu$m - poids spécifique de 2,7 à 2,8,
- kaolin : silicate d'aluminium hydraté complexe - particules de 1 à 50 $\mu$m de préférence de 2 à 50 $\mu$m - poids spécifique 2,58,
- carbonate de calcium naturel : particules de 1,5 à 20 $\mu$m, de préférence 2 à 20 $\mu$m - poids spécifique 2,7,
- carbonate de calcium précipité : particules de 1,5 à 20 $\mu$m, de préférence 2 à 20 $\mu$m - poids spécifique 2,7,
- sulfate de baryum naturel : particules de 2 à 50 $\mu$m - poids spécifique environ 4,4 - 4,5,
- sulfate de baryum précipité : particules de 2 à 20 $\mu$m - poids spécifique environ 4,35,
- silice de diatomées : particules de 2 à 50 $\mu$m - poids spécifique environ 2 à 2,3,
- blanc satin : sulfoaluminate de calcium hydraté,
- sulfate de calcium naturel : particules de 2 à 50 $\mu$m - poids spécifique environ 2,32 - 2,96,
- alumine hydratée : particules de 2 à 50 $\mu$m,
- aluminate de sodium et de calcium : particules de 1 à 20 $\mu$m - poids spécifique 2,2,
- silicoaluminate de sodium : particules de 1 à 20 $\mu$m - poids spécifique environ 2,12,
- titane rutile : particules de 0,5 à 10 $\mu$m - poids spécifique environ 4,2,
- titane anatase : particules de 0,5 à 10 $\mu$m - poids spécifique environ 3,9,
- hydroxyde de magnésium : particules de 2 à 50 $\mu$m.

Note : le poids spécifique est exprimé en g/ml.

On peut éventuellement ajouter des charges organiques pour apporter des propriétés additionnelles particulières.

La description suivante permettra de comprendre à l'aide d'une première série d'expériences comment l'invention peut être mise en pratique.

Exemple 1 (témoin)

On fabrique, selon le brevet EP-6 390 de la demanderesse, une feuille papetière à partir d'une composition aqueuse comprenant le mélange de base suivant (les quantités sont données en poids de produits secs) :

| | |
|---|---|
| - cellulose : mélange de deux tiers de fibres longues et d'un tiers de fibres courtes raffinées à 20 degrés Schoepper | 15,2 g |
| - fibres de verre : HW 618 vendus par OWENS CORNING 11 μm de diamètre ; 3,2 mm de long | 2,8 g |
| - charge minérale : talc n°2 vendu par TALC DE LUZERNAC | 71,1 g |
| - floculant cationique : Nadavin® LT vendu par BAYER AG résine de polyamide/polyamine - épichlorhydrine | 0,4 g |
| - liant : latex DOW 86 815 vendu par DOW CHEMICAL latex de styrène - butadiène carboxylé. | 10,4 g |

Ce mélange est dilué dans le bol d'une formette à la concentration désirée pour l'obtention d'une formette ayant une épaisseur voisine de 1 mm. Après cette dilution, on ajoute dans le bol l'agent de rétention :

| | |
|---|---|
| - SEPARAN XD 8 494 vendu par DOW CHEMICAL poly(acrylamide) cationique de haut poids moléculaire. | 0,1 g |

Exemples 2 à 5

En procédant comme dans l'exemple 1, on a préparé des produits en feuille selon l'invention en incorporant, après les fibres, diverses quantités de poudres de caoutchouc de récupération vendues par la Société LAURENT PNEU.

La qualité TO-008 est une poudre tamisée de granulométrie inférieure à 80 μm.

La qualité TO-05 est une poudre tamisée de granulométrie inférieure à 500 μm.

EP 0 436 649 B1

Les compositions et les caractéristiques des exemples 1 à 5 sont données dans le tableau I.

TABLEAU I

| | Ex. 1 | Ex. 2 | Ex. 3 | Ex. 4 | Ex. 5 |
|---|---|---|---|---|---|
| **Composition (en % poids sec)** | | | | | |
| Parts de cellulose | 15,2 | 15,2 | 15,2 | 15,6 | 15,6 |
| Parts de fibres de verre | 2,8 | 2,8 | 2,8 | 0 | 0 |
| Parts de caoutchouc référence | – | 71,1 T0008 | 35,55 T0008 | 73,1 T0008 | 73,1 T005 |
| Parts de talc | 71,1 | – | 35,55 | – | – |
| Parts de liant | 10,4 | 10,4 | 10,4 | 10,7 | 10,7 |
| Floculants et additifs | 0,5 | 0,5 | 0,5 | 0,6 | 0,6 |
| **Caractéristiques** | | | | | |
| – Grammage ($g/m^2$) | 855 | 539 | 615 | 526 | 469 |
| – Epaisseur ($\mu$) | 1120 | 1018 | 936 | 978 | 1038 |
| – Main ($\mu/g$) (épaisseur/grammage) | 1,31 | 1,89 | 1,52 | 1,86 | 2,21 |
| – Porosité Bendtsen en ml/min | 332 | 2700 | 1538 | 2450 | >3000 |
| – Scott Bond Cohésion interne en unités Scott Bond * | 219 | 336 | 243 | 390 | 317 |
| – Absorption eau (1) (par immersion) | | | | | |
| 10 h | 19,8% | 35,6% | 39,6% | 30,6% | 57,8% |
| 24 h | 54,8% | 70,4% | 80,3% | 58,9% | 81,8% |
| – Désorption eau (2) à 50% HR et 23°C | | | | | |
| 1 h | 33,9% | 31,4% | 30,4% | 43,6% | 35,5% |
| 6 h | 99% | 99,5% | 99% | 99,3% | 99,5% |
| **Sur papiers étuvés 2 h à 200°C** | | | | | |
| – Pliabilité (3) | | | | | |
| mandrin 1,8 mm | 5 | 1 | 1 | 1 | 1 |
| mandrin 6,0 mm | 2 | 1 | 1 | 1 | 1 |
| – Allongement à la rupture en % sur bande de 1,5 mm | 3,9 | 6,1 | 5,1 | 8,8 | 10,3 |
| – Rigidité TABER en unité TABER | 325 | 70 | 140 | 53 | 32 |

(1) en % du poids du matériau initial

(2) en % du poids d'eau perdue par rapport à l'eau initiale retenue après immersion de 24 h dans l'eau.

(3) Echelle : 1 : pas de fissures ou cassures
                    2 : fortes cassures
                    3 : très fortes cassures
    * mesurée sur l'appareil Internal Bond Tester "modèle B" de Scott Testers INC.

On observe à partir du tableau I que l'introduction selon l'invention d'un élastomère en poudre permet d'obtenir un matériau ayant une forte élasticité combinée à une forte porosité, tout en conservant ou même en améliorant la cohésion interne (comparativement au matériau de l'art antérieur).

7

La forte élasticité du matériau selon l'invention est exprimée par une augmentation de l'allongement à la rupture, une forte amélioration de la pliabilité et une forte réduction de la rigidité.

La forte porosité du matériau est exprimée par une forte augmentation de la main et de la porosité Bendteen ainsi que par ses qualités à absorber de fortes quantités d'eau et à les désorber rapidement.

La conservation voire l'amélioration de la cohésion interne du matériau est exprimée par la stabilité voire l'augmentation du Scott Bond.

Une deuxième série d'essais, exemples 6 à 12, a été réalisée pour des matériaux de différentes épaisseurs afin d'évaluer d'efficacité de l'invention selon l'épaisseur, l'homme du métier sachant que la flexibilité est d'autant plus difficile à obtenir que le matériau est épais.

Exemple comparatif 6

On réalise une formette selon l'exemple 1 ci-dessus, les fibres de cellulose ayant un degré de raffinage de 25° Schoepper.

Exemples 7 à 12

Les exemples 7 à 12 représentent les différents essais réalisés selon l'invention, les épaisseurs étant de l'ordre de 1 à 3 mm avec deux qualités TO-05 et TO-02 de poudre de caoutchouc de récupération vendue par la Société LAURENT PNEU.

La qualité TO-02 est une poudre tamisée de granulométrie inférieure à 200 $\mu$m.

Les compositions et les caractéristiques des exemples 6 à 12 sont données dans le tableau II.

Les résultats obtenus confirment que l'introduction d'un élastomère en poudre permet d'obtenir un matériau ayant une forte flexibilité combinée à une forte porosité sans dégradation de la cohésion interne et cela quelle que soit l'épaisseur dudit matériau.

De plus, des mesures de conductibilité thermique et d'absorption acoustique ont mis en évidence des propriétés de pouvoir isolant thermique et acoustique de ces dits matériaux.

Les qualités très particulières des matériaux réalisés selon l'invention, à savoir la flexibilité, la faculté à absorber et à désorber très rapidement de grandes quantités de liquide, le pouvoir isolant à la fois thermique et acoustique, ainsi que le faible coût de ces dits matériaux permettent d'envisager avantageusement leur emploi dans diverses applications, non seulement comme supports pour revêtements de sols ou muraux vinyliques, mais aussi pour d'autres applications tant dans le domaine du bâtiment que dans la maroquinerie, l'industrie des bagages ou dans l'industrie de la chaussure.

L'utilisation du produit de l'invention n'est évidemment pas restreinte aux domaines d'applications cités en exemples.

TABLEAU II

| | Ex.6 | Ex.7 | Ex.8 | Ex.9 | Ex.10 | Ex.11 | Ex.12 |
|---|---|---|---|---|---|---|---|
| Composition (en % poids sec) | | | | | | | |
| Parts de cellulose | 15,2 | 15,2 | 15,2 | 15,2 | 15,2 | 15,6 | 15,6 |
| Parts de fibres de verre | 2,8 | 2,8 | 2,8 | 2,8 | 2,8 | 0 | 0 |
| Parts de caoutchouc référence | – | 71,1 T0002 | 71,1 T0005 | 35,55 T0002 | 35,55 T0002 | 73,1 T0002 | 73,1 T0002 |
| Parts de talc | 71,1 | – | – | 35,55 | 35,55 | – | – |
| Parts de liant | 10,4 | 10,4 | 10,4 | 10,4 | 10,4 | 10,7 | 10,7 |
| Floculants et additifs | 0,5 | 0,5 | 0,5 | 0,5 | 0,5 | 0,6 | 0,6 |
| Caractéristiques | | | | | | | |
| – Grammage (g/m²) | 852 | 504 | 438 | 598 | 1915 | 1647 | 565 |
| – Epaisseur (µ) | 943 | 1024 | 1050 | 934 | 2707 | 2923 | 1240 |
| – Main (µ/g) (épaisseur/grammage) | 1,11 | 2,03 | 2,40 | 1,56 | 1,41 | 1,77 | 2,19 |
| – Porosité Bendtsen en ml/min | 230 | >3000 | >3000 | 1495 | 580 | 1450 | 2542 |
| – Scott Bond Cohésion interne en unités Scott Bond * [1] | 235 | 382 | 245 | 235 | 386 | >500 | 398 |
| – Absorption eau (par immersion) | | | | | | | |
| 10 h | 14,2% | 35,6% | 64,7% | 57,6% | 23,7% | 14,3% | 47,9% |
| 24 h | 48,9% | 70% | 137% | 84,8% | 52,9% | 40,4% | 80,8% |
| – Désorption eau [2] à 50% HR et 23°C | | | | | | | |
| 1 h | 18,1% | 26,7% | 26,9% | 24,0% | 16,6% | 25,9% | 24,9% |
| 6 h | 99,1% | 99,6% | 99,3% | 99,6% | 98,6% | 98,6% | 99,5% |
| Sur papiers étuvés 2 h à 200°C | | | | | | | |
| – Pliabilité [3] | | | | | | | |
| mandrin 1,8 mm | 5 | 1 | 1 | 1 | 1 | 1 | 1 |
| mandrin 6,0 mm | 2 | 1 | 1 | 1 | 1 | 1 | 1 |
| – Allongement à la rupture en % | 3,9 | 7,1 | 7,1 | 5,6 | 6,8 | 13,2 | 10,1 |
| Mesures d'isolation | | | | | | | |
| – Conductibilité [4] thermique λ en W/m.° | 0,11 | 0,07 | | 0,06 | | | |
| – Absorption acoustique [5] sous 2000 Hz (en %) | 1,5 | 4 | | 3,5 | | | |

(1) en % du poids du matériau initial
(2) en % du poids d'eau perdue par rapport à l'eau initiale retenue après immersion de 24 h dans l'eau
(3) Echelle : 1. Pas de fissures ou cassures
    2. Fortes cassures
    3. Très fortes cassures
(4) méthode du fluxmètre à double capteur entre plaques chaude et froide
(5) méthode du tube de KUNDT sur analyseur hétérodyne BRUEL-KJRER TYPE 2010
    * mesurée sur l'appareil Internal Bond Tester "modèle B" de Scott Testers INC.

**Revendications**

1. Composition de base pour la fabrication d'un produit en feuille obtenu par voie humide, du type comprenant un mélange d'une poudre de polymère de granulométrie donnée et des fibres, comprenant un mélange, de préférence intime, de :
- 20 à 80 % en poids d'au moins un élastomère en poudre de granulométrie inférieure au moins à 500 micromètres,
- 10 à 70 % en poids de fibres, de longueur inférieure à environ 10 mm, choisies dans le groupe formé par les fibres naturelles, les fibres minérales et leurs mélanges.
- éventuellement de 0 à 20 % en poids d'au moins un liant,
- éventuellement de 0,1 à 5 % en poids d'au moins un floculant et/ou d'au moins un agent de rétention,
- éventuellement de 0 à 40 % d'au moins une charge minérale et/ou organique, cette charge pouvant éventuellement remplacer en partie ledit élastomère,

le total des composants ci-dessus étant de 100 %, les teneurs étant exprimées en poids sec.

2. Produit en feuille, notamment obtenu par voie humide, en particulier obtenu à partir de la composition de base selon la revendication 1, comprenant un mélange de préférence intime de :
- 20 à 80 % en poids d'au moins un élastomère en poudre de granulométrie inférieure au moins à 500 micromètres,
- 10 à 70 % en poids de fibres, de longueur inférieure à environ 10 mm, choisies dans le groupe formé par les fibres naturelles, les fibres minérales et leurs mélanges.
- éventuellement de 0 à 20 % en poids d'au moins d'un liant,
- éventuellement de 0,1 à 5 % en poids d'au moins un floculant et/ou d'un agent de rétention,
- éventuellement de 0 à 40 % d'au moins une charge minérale et/ou organique, cette charge pouvant éventuellement remplacer en partie ledit élastomère,

le total des composants ci-dessus étant de 100 %, les teneurs étant exprimées en poids sec.

3. Produit en feuille selon la revendication 2 caractérisé en ce que les fibres précitées sont des fibres de cellulose, de préférence raffinées.

4. Produit en feuille selon la revendication 2 , caractérisé en ce que les fibres précitées comprennent un mélange de fibres de verre et de fibres de cellulose.

5. Produit en feuille selon l'une quelconque des revendications 2 à 4, caractérisé en ce que la poudre élastomère précitée, dite poudrette d'élastomère, comprend un caoutchouc vulcanisé de récupération.

6. Produit en feuille selon l'une quelconque des revendications 2 à 5, caractérisé en ce qu'il comprend :
- 70 à 75 % environ en poids d'un mélange de poudre de caoutchouc vulcanisé et éventuellement une charge minérale et/ou organique ,
- 15 à 20 % environ en poids de fibres de cellulose, de préférence raffinées, et/ou de fibres minérales,
- 8 à 12 % environ en poids d'au moins un liant type latex,
- 0,3 à 5 % environ en poids d'au moins un floculant cationique,

le total des composants étant de 100 %, les teneurs étant exprimées en poids sec.

7. Procédé de préparation par voie humide d'un produit en feuille, en particulier tel que défini selon l'une quelconque des revendications 2 à 6, consistant à :
- préparer une suspension aqueuse d'un mélange contenant :
  . de 20 à 80 % en poids d'un élastomère en poudre, de granulométrie moyenne inférieure à 500 micromètres ou d'un mélange de cet élastomère avec au moins une charge,
  . de 10 à 70 % en poids de fibres de longueur inférieure à 10 mm, choisies dans le groupe formé par les fbres naturelles, les fibres minérales et leurs mélanges.
- ajouter éventuellement une première quantité d'un agent floculant à la suspension ;
- ajouter éventuellement de 0 à 20 % en poids d'un liant à la suspension contenant l'agent floculant,
- ajouter éventuellement des additifs,
- ajouter éventuellement ensuite une seconde quantité d'un agent floculant et/ou un agent de rétention,
- déposer la suspension aqueuse résultante sur une toile,
- égoutter la suspension déposée sur la toile pour former une feuille humide, et
- sécher la feuille pour obtenir ledit produit en feuille.

**Claims**

1. Basic composition for the manufacture of a product in sheet form obtained by the wet method, of the type comprising a mixture of a polymer powder of given granulometry and of fibers, comprising a preferably intimate mixture of:
   - 20 to 80% by weight of at least one elastomer in powder form, of granulometry less than at least 500 $\mu$m,
   - 10 to 70% by weight of fibers of length less than about 10 mm, selected from the group composed of natural fibers, inorganic fibers and mixtures thereof,
   - optionally between 0 and 20% by weight of at least one binding agent,
   - optionally between 0.1 and 5% by weight of at least one flocculating agent and/or of at least one retention agent,
   - optionally between 0 and 40% of at least one inorganic and/or organic filler, said filler possibly partly replacing said elastomer,
   the total of the above components being 100%, the contents being given in dry weight.

2. Product in sheet form, particularly obtained by the wet method and more particularly obtained from the basic composition according to claim 1, comprising a preferably intimate mixture of:
   - 20 to 80% by weight of at least one elastomer in powder form, of granulometry less than at least 500 $\mu$m,
   - 10 to 70% by weight of fibers of length less than about 10 mm, selected from the group composed of natural fibers, inorganic fibers and mixtures thereof,
   - optionally between 0 and 20% by weight of at least one binding agent,
   - optionally between 0.1 and 5% by weight of at least one flocculating agent and/or of at least one retention agent,
   - optionally between 0 and 40% of at least one inorganic and/or organic filler, said filler possibly partly replacing said elastomer,
   the total of the above components being 100%, the contents being given in dry weight.

3. Product in sheet form according to claim 2, characterized in that the aforesaid fibers are cellulose fibers and preferably refined cellulose fibers.

4. Product in sheet form according to claim 2, characterized in that the aforesaid fibers comprise a mixture of glass fibers and of cellulose fibers.

5. Product in sheet form according to any one of claims 2 to 4, characterized in that the aforesaid elastomer powder, called elastomer fine dust, comprises a vulcanized recovery rubber.

6. Product in sheet form according to any one of claims 2 to 5, characterized in that it comprises:
   - about 70 to 75% by weight of a mixture of vulcanized rubber powder and optionally an inorganic and/or organic filler,
   - about 15 to 20% by weight of cellulose fibers and preferably refined cellulose fibers and/or inorganic fibers,
   - about 8 to 12% by weight of a least one latex type binding agent,
   - about 0.3 to 5% by weight of at least one cationic flocculating agent,
   the total of the above components being 100%, the contents being given in dry weight.

7. Process for the preparation of a product in sheet form by the wet method, in particular as defined according to any one of claims 2 to 6, which consists in:
   - preparing an aqueous suspension of a mixture containing:
     . 20 to 80% by weight of an elastomer in powder form, of mean granulometry less than 500 $\mu$m or of a mixture of said elastomer with at least one filler,
     . 10 to 70% by weight of fibers of length less than 10 mm, selected from the group composed of natural fibers, inorganic fibers and mixtures thereof,
   - optionally adding to the suspension a first quantity of a flocculating agent,
   - optionally adding between 0 and 20% by weight of a binding agent to the suspension containing the flocculating agent,
   - optionally adding additives,

11

- then optionally adding a second quantity of a flocculating agent and/or of a retention agent,
- depositing the resulting aqueous suspension on a screen,
- draining the suspension deposited on the screen in order to form a wet sheet, and
- drying the sheet in order to obtain said product in sheet form.

**Patentansprüche**

1. Träger-Zusammensetzung (Basis-Zusammensetzung) für die Herstellung eines blattförmigen Produkts (Folienprodukts) nach einem Naßverfahren, die eine Mischung aus einem Polymerpulver mit einer gegebenen Teilchengröße und Fasern enthält, die umfaßt eine (vorzugsweise innige) Mischung von
   - 20 bis 80 Gew.-% mindestens eines pulverförmigen Elastomers mit einer Teilchengröße von mindestens weniger als 500 $\mu$m,
   - 10 bis 70 Gew.-% Fasern mit einer Länge von weniger als etwa 10 mm, ausgewählt aus der Gruppe der natürlichen Fasern, der Mineralfasern und ihren Mischungen,
   - gegebenenfalls 0 bis 20 Gew.-% mindestens eines Bindemittels,
   - gegebenenfalls 0,1 bis 5 Gew.-% mindestens eines Flockungsmittels und/oder mindestens eines Retentionsmittels,
   - gegebenenfalls 0 bis 40 Gew.-% mindestens eines mineralischen und/oder organischen Füllstoffs, der gegebenenfalls das genannte Elastomere zum Teil ersetzen kann,
   wobei die Gesamtmenge der obengenannten Komponenten 100 % beträgt und die angegebenen Gehalte auf das Trockengewicht bezogen sind.

2. Blattförmiges Produkt (Folienprodukt), hergestellt insbesondere nach einem Naßverfahren, das insbesondere hergestellt wurde aus der Träger-Zusammensetzung (Basis-Zusammensetzung) nach Anspruch 1, die umfaßt eine (vorzugsweise innige) Mischung von:
   - 20 bis 80 Gew.-% mindestens eines pulverförmigen Elastomers mit einer Teilchengröße von mindestens weniger als 500 $\mu$m,
   - 10 bis 70 Gew.-% Fasern mit einer Länge von weniger als etwa 10 mm, ausgewählt aus der Gruppe der natürlichen Fasern, der Mineralfasern und ihren Mischungen,
   - gegebenenfalls 0 bis 20 Gew.-% mindestens eines Bindemittels,
   - gegebenenfalls 0,1 bis 5 Gew.-% mindestens eines Flockungsmittels und/oder eines Retentionsmittels,
   - gegebenenfalls 0 bis 40 Gew.-% mindestens eines mineralischen und/oder organischen Füllstoffs, der gegebenenfalls einen Teil des genannten Elastomers ersetzen kann,
   wobei die Gesamtmenge der obengenannten Komponenten 100 % beträgt und die angegebenen Gehalte auf das Trockengewicht bezogen sind.

3. Blattförmiges Produkt nach Anspruch 2, dadurch gekennzeichnet, daß es sich bei den genannten Fasern um vorzugsweise raffinierte Cellulosefasern handelt.

4. Blattförmiges Produkt nach Anspruch 2, dadurch gekennzeichnet, daß die genannten Fasern eine Mischung von Glasfasern und Cellulosefasern umfassen.

5. Blattförmiges Produkt nach einem der Ansprüche 2 bis 4, dadurch gekennzeichnet, daß das genannte Elastomer-Pulver, als Elastomer-Abfall (Kompost) bezeichnet, einen vulkanisierten Recycling-Kautschuk umfaßt.

6. Blattförmiges Produkt nach einem der Ansprüche 2 bis 5, dadurch gekennzeichnet, daß es umfaßt
   - etwa 70 bis 75 Gew.-% einer Mischung von vulkanisiertem Kautschuk-Pulver und gegebenenfalls einem mineralischen und/oder organischen Füllstoff,
   - etwa 15 bis 20 Gew.-% vorzugsweise raffinierte Cellulosefasern und/oder Mineralfasern,
   - etwa 8 bis 12 Gew.-% mindestens eines Bindemittels vom Latex-Typ,
   - etwa 0,3 bis 5 Gew.-% mindestens eines kationischen Flockungsmittels,
   wobei die Gesamtmenge der Komponenten 100 % beträgt und die angegebenen Gehalte auf das Trockengewicht bezogen sind.

7. Verfahren zur Herstellung eines blattförmigen Produkts auf nassem Wege, insbesondere eines solchen, wie es in einem der Ansprüche 2 bis 6 definiert ist, das darin besteht, daß man:

- eine wäßrige Suspension einer Mischung herstellt, die enthält

    . 20 bis 80 Gew.-% eines pulverförmigen Elastomers mit einer mittleren Teilchengröße von mindestens weniger als 500 $\mu$m oder einer Mischung dieses Elastomers mit mindestens einem Füllstoff,

    . 10 bis 70 Gew.-% Fasern mit einer Länge von weniger als 10 mm, ausgewählt aus der Gruppe der natürlichen Fasern, Mineralfasern und ihren Mischungen,

- gegebenenfalls eine erste Menge eines Flockungsmittels zu der Suspension zugibt;

- gegebenenfalls 0 bis 20 Gew.-% eines Bindemittels zu der das Flockungsmittel enthaltenden Suspension zugibt,

- gegebenenfalls Additive zugibt,

- gegebenenfalls anschließend eine zweite Menge eines Flockungsmittels und/oder eines Retentionsmittels zugibt,

- die resultierende wäßrige Suspension auf einem Gewebe abscheidet,

- die auf dem Gewebe abgeschiedene Suspension abtropfen läßt unter Bildung eines feuchten Blattes und

- das Blatt trocknet, wobei man das genannte blattförmige Produkt erhält.